## Europäisches Patentamt
## European Patent Office
## Office européen des brevets

(19)

(11) Publication number: **0 012 910**
**B1**

(12) **EUROPEAN PATENT SPECIFICATION**

(45) Date of publication of patent specification: **04.11.81**

(51) Int. Cl.³: **G 11 B 5/20, G 11 B 5/12, H 01 F 27/28, G 11 B 5/40**

(21) Application number: **79105055.2**

(22) Date of filing: **10.12.79**

(54) **Thin film magnetic heads.**

(30) Priority: **21.12.78 US 972103**

(43) Date of publication of application:
**09.07.80 Bulletin 80/14**

(45) Publication of the grant of the European patent:
**04.11.81 Bulletin 81/44**

(84) Designated Contracting States:
**BE CH DE FR GB IT NL SE**

(56) References cited:

**DE - A - 2 131 096**
**US - A - 3 564 522**
**US - A - 3 685 144**
**US - A - 4 075 591**

(73) Proprietor: **International Business Machines Corporation**
**Armonk, N.Y. 10504 (US)**

(72) Inventor: **Church, Mark Anthony**
**15 1/2 Peralta Street**
**Los Gatos, California 95030 (US)**
Inventor: **Jones, Jr., Robert Edward**
**6776 Hampton Drive**
**San Jose, California 95120 (US)**

(74) Representative: **Grant, Iain M.**
**IBM UNITED KINGDOM Patent Operations,**
**Hursley Park**
**Winchester Hants, SO21 2JN (GB)**

Courier Press, Leamington Spa, England.

Thin film magnetic heads

This invention relates to thin film magnetic heads.

One of the major problems found with the use of thin film magnetic transducers is the generation of heat which is not dissipated readily and which accumulates nonuniformly over the volume of the transducer. Excessive heat may cause delamination of the layered structure or stretching of the parts, or dilation with resultant pole trip protrusion.

When forming the thin film magnetic transducer, the back closure which is formed by the magnetic pole pieces should be as close to the transducing gap as possible to minimize signal loss that occurs with longer magnetic circuit paths. In addition, the electrical conducting coil, which is magnetically coupled to the pole pieces and carries the current generating the magnetic flux appearing at the transducing gap, should have as many turns as possible to enable increased signal amplitude.

The present invention provides a thin film magnetic head comprising a non-magnetic substrate having an air bearing surface normal to a deposition surface upon which magnetic layers forming a magnetic yoke are deposited with a transducing gap at the air bearing surface and a back closure remote from the air bearing surface, and a multiturn electrical conductive planar coil around the back closure characterised in that the planar coil has turns of generally curved shape without sharp corners and that portion of each turn in the area between transducing gap and back closure is of narrower width than the adjacent portions thereof.

Embodiments of the invention provide a thin film transducer formed with a planar conducting coil of several turns, with the coil being of low resistance and generating a minimal amount of heat, yet having the coil portion between the back gap closure and transducing gap contained in a relatively small area. Thus a thin film magnetic head is provided with minimal thermal and stress effects with resultant longer life.

The invention will now be described, by way of example, with reference to the accompanying drawing in which:

FIGURE 1 is a sectional view of a portion of thin film magnetic head, including electrically conductive coil turns, in accordance with this invention; and

FIGURE 2 is a plan view of the whole conductive coil, a portion of which is sectionally shown in Figure 1.

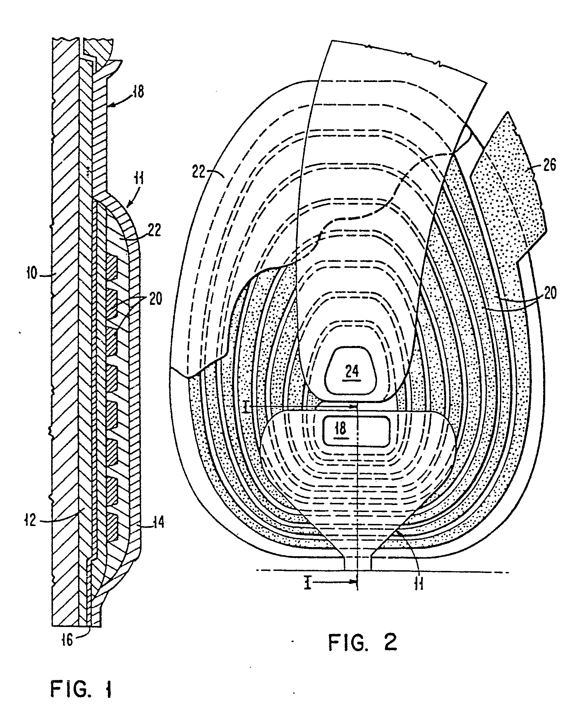

It should be noted that FIG. 2 is not to the same dimensions as FIG. 1.

With reference to the drawing, a thin film head assembly comprises a nonmagnetic ceramic support 10 having an air bearing surface normal to a deposition surface upon which are deposited magnetic pole piece layers 12 and 14, made from Permalloy, by way of example forming a magnetic yoke 11. A nonmagnetic insulating material 22 is deposited between the pole piece layers 12 and 14. A portion of the insulating material defines a transducing gap 16 at the air bearing surface, which interacts in transducing relation with a magnetic medium, as is well known in the art. For this purpose, the support 10 is formed as a slider with the air bearing surface that flies closely adjacent to the record medium, which may be a rotating magnetic disk, during operation of a disk file.

The thin film head structure has a back closure 18 remote from the air bearing surface formed by the closure of the pole pieces 12 and 14. The back closure 18 is spaced from the transducing gap, with a multi-turn planar coil 20 interposed between the back closure 18 and the transducing gap, and around the back closure 18.

The continuous coil 20 is deposited in a layer by plating, for example, and is located between and coupled magnetically to the separated pole piece layers 12 and 14. The coil 20 and the pole pieces 12 and 14 are separated by the insulator 22, which insulates the portions of the coil between the pole pieces. The centre area of the coil provides an electrical contact 24, and similarly, the outermost termination of the coil has an enlarged area for an electrical contact 26. The contacts are connected to external wiring and head circuitry (not shown) for generating write and processing read data signals.

The single layer or planar coil 20 is formed in a roughly elliptical configuration with smaller width and thus cross-sectional area in the area between the transducing gap 16 and the back closure 18 with progressively greater width and cross-sectional area as the distance from the gap increases.

Thus the turns of planar coil 20 are of generally curved state without sharp corners. However, in the transducing gap 16/back closure area and at the opposite end of coil 20, the turns are for a short length straight and parallel both to each other and to the air bearing surface. Also the spacing between adjacent turns of planar coil 20 is substantially constant, the width of the spacing being determined by electrical insulation requirements.

The back closure 18 is located relatively close to the air bearing surface of the transducing gap. Nevertheless, a relatively large number of coil turn portions are positioned in the area between the back closure 18 and the transducing gap 16, because the widths of the elliptical coil are relatively narrow in that area. As a result of the large number of turns an increase in signal output is realized. Furthermore, the larger turn widths at positions away from the transducing gap 16/back closure 18 area provides a reduced electrical resistance. In addition, since the elliptical turns are curved with no corners or sharp ends, there is less resistance to current flow. Also, the elliptical pattern affords a reduced total length of the conductive coil, as compared to rectangular or circular type coils. As a result of these features, the total resistance of the coil is relatively low and there is less heat generation and optimum heat dissipation. The significant reduction in heat prevents delamination, stretch and dilation of the thin film layers, and eliminates a cause of pole tip protrusion at the air bearing surface.

The elliptical coil configuration, which has a uniform progression of varying width, may be deposited by well known plating techniques, which are less expensive than sputtering or evaporation processes. Plating of coils in other geometries tends to build structures with nonuniform widths, particularly if corners are included in the geometry. The elimination of corners and sharp ends realizes less mechanical stress for the fabricated coil.

There has been disclosed herein a thin film magnetic head assembly incorporating a multiturn, continuous electrical coil layer plated between magnetic pole pieces, and formed in an elliptical configuration. The width and thus the cross-sectional area of the coil turns progressively increases as the distance from the area of the transducing gap/back closure increases. As a result, an increase in signal output is realized and electrical resistance and heat generation is substantially reduced.

## Claims

1. A thin film magnetic head comprising a non-magnetic substrate (10) having an air bearing surface normal to a deposition surface upon which magnetic layers (12, 14) forming a magnetic yoke (11) are deposited with a transducing gap (16) at the air bearing surface and a back closure (18) remote from the air bearing surface, and a multi-turn electrical conductive planar coil (20) around the back closure (18) characterised in that the planar coil (20) has turns of generally curved shape without sharp corners and that portion of each turn in the area between transducing gap (16) and back closure (18) is of narrower width than the adjacent portions thereof.

2. A thin film magnetic head as claimed in claim 1 characterised in that the turns of planar coil (20) generally progressively increase in width as the distance from said area increases.

3. A head as claimed in claim 1 or claim 2 characterised in that the turns of planar coil (20) in said area are straight and parallel to each other.

4. A head as claimed in any one of the preceding claims characterised in that the turns of planar coil (20) progressively increasing in width are generally elliptical.

5. A head as claimed in any one of the preceding claims characterised in that the spacing between adjacent turns of planar coil (20) is substantially constant.

## Patentansprüche

1. Dünnschicht-Magnetkopf mit einem nichtmagnetischen Substrat (10), welches eine Lufttragfläche senkrecht zu einer Ablagerungsschicht aufweist, auf der magnetische Schichten (12, 14), die ein magnetisches Joch (11) mit einem Übertragungsspalt (16) in der Lufttragfläche und einen Magnetschluß (18), entfernt von der Lufttragfläche bilden, aufgetragen werden, und einer ebenen, elektrisch leitenden Mehrwindungsspule (20) enthält, die den rückwärtigen Magnetschluß (18) um greift, dadurch gekennzeichnet, daß die ebene Spule (20) Windungen von generell gebogener Form ohne scharfe Ecken aufweist und daß diejenigen Teile jeder Windung, die im Bereich zwischen dem Übertragungsspalt (16) und dem rückwärtigen Magnetschluß (18) verlaufen in der Breite schmaler sind als die dazu benachbarten Teile.

2. Dünnfilm-Magnetkopf gemäß Anspruch 1, dadurch gekennzeichnet, daß die Windungen der ebenen Spule (20) generell in ihrer Breite zunehmen mit zunehmendem Abstand von dem besagten Bereich.

3. Kopf gemäß Anspruch 1 oder 2, dadurch gekennzeichnet, daß die Windungen der ebenen Spule (20) in besagtem Bereich gerade und parallel zueinander sind.

4. Kopf gemäß einem der vorherigen Ansprüche, dadurch gekennzeichnet, daß diejenigen Teile der Windungen der eben Spule (20), die progressiv in ihrer Breite zunehmen, generell elliptisch gestaltet sind.

5. Kopf gemäß einem der vorhergehenden Ansprüche, dadurch gekennzeichnet, daß der Abstand zwischen benachbarten Windungen der ebenen Spule (20) im wesentlichen konstant ist.

## Revendications

1. Tête magnetique à films minces comportant un substrat non magnétique (10) présentant une surface à coussin d'air normale à une surface de dépôt sur laquelle sont disposées des couches magnétiques (12, 14) constituant une culasse magnétique pour former un entrefer de transduction (16) au niveau de ladite surface à coussin d'air et une surface de contact arrière (18) éloignée de ladite surface à coussin d'air, et un enroulement plan électriquement conducteur (20) à spires multiples disposées autour de ladite surface de contact arrière (18), caractérisée en ce que les spires de l'enroulement plan (20) présentent une forme généralement courbe et sans angle et en ce que la partie de chaque spire qui se trouve dans la région comprise entre l'entrefer de transduction (16) et la surface de contact arrière (18) est plus étriote que les parties adjacentes.

2. Tête magnétique à films minces selon la revendication 1, caractérisée en ce que la largeur des spires de l'enroulement plan (20) augmente progressivement au fur et à mesure que l'on s'éloigne de ladite région.

3. Tête magnétique selon la revendication 1 ou 2, caractérisée en ce que les parties des spires de l'enroulement plan (20) qui se trouvent dans ladite région sont rectilignes et mutuellement parallèles.

4. Tête magnétique selon l'une quelconque des revendications précédentes, caractérisée en ce que les spires de l'enroulement plan 20 dont la largeur augmente progressivement, présentent une forme généralement elliptique.

5. Tête magnétique selon l'une quelconque des revendication précédentes, caractérisée en ce que l'espacement entre les spires adjacentes de l'enroulement plan (20) demeure pratiquement constant.

0012910

FIG. 1

FIG. 2

1